(19) **Europäisches Patentamt / European Patent Office / Office européen des brevets**

(11) **EP 4 657 784 A1**

(12) **EUROPEAN PATENT APPLICATION**

(43) Date of publication:
**03.12.2025 Bulletin 2025/49**

(21) Application number: **24192376.2**

(22) Date of filing: **01.08.2024**

(51) International Patent Classification (IPC):
**H04L 1/08** *(2006.01)*

(52) Cooperative Patent Classification (CPC):
**H04L 1/08**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.05.2024 IN 202441041072**

(71) Applicant: **Samsung Electronics Co., Ltd**
**Suwon-si, Gyeonggi-do 16677 (KR)**

(72) Inventors:
• **GOVIL, Shalini**
  **560048 Bengaluru (IN)**
• **KUMAR, Rohit**
  **560048 Bengaluru (IN)**
• **KUMAR, Amrish**
  **560048 Bengaluru (IN)**

(74) Representative: **Marks & Clerk LLP**
**15 Fetter Lane**
**London EC4A 1BW (GB)**

Remarks:
Amended claims in accordance with Rule 137(2) EPC.

(54) **SYSTEM AND METHOD FOR DISTRIBUTING UPLINK PACKETS IN A PACKET DUPLICATION CONFIGURED BEARER**

(57) Disclosed is a method for distributing uplink packets between a primary Radio Link Control (RLC) path and a secondary RLC path in a packet duplication configured bearer. The method includes transmitting, by a user equipment (UE), the uplink packets over the primary RLC path and the secondary RLC path as duplicate packets, dynamically receiving, at the UE from a network entity, a deactivation signal via a Medium Access Control (MAC) control element or a Radio Resource Control (RRC) reconfiguration, the deactivation signal indicating deactivation of packet duplication, and discarding, at the UE, one or more non-transmitted duplicate packets from the primary RLC path and the secondary RLC path based on a discard ratio in response to receiving the deactivation signal, the discard ratio being indicative of a packet discarding proportion between the primary RLC path and the secondary RLC path.

FIG. 8

Transmitting, by a user equipment (UE), uplink packets over the primary RLC path and the secondary RLC path as duplicate packets — 802

Receiving, at the UE from a network entity, a deactivation signal indicative of deactivation of duplication of uplink packets, dynamically via a Medium Access Control (MAC) control element or via Radio Resource Control (RRC) reconfiguration, at a Packet Data Convergence Protocol (PDCP) module associated with the UE — 804

Upon receiving a duplication deactivation signal, discarding, at the UE, one or more of non-transmitted duplicate packets from the primary RLC path and the secondary RLC path based on a discard ratio, wherein the discard ratio is indicative of a packet discarding proportion between the primary RLC path and the secondary RLC path — 806

**Description**

<u>TECHNICAL FIELD</u>

The present disclosure generally relates to the field of communication networks, and more specifically relates to a system and method for distributing uplink packets between a primary radio link control (RLC) path and a secondary RLC path in a packet duplication configured bearer. The invention generally relates to a method for distributing uplink packets between a primary RLC path and a secondary RLC path in a packet duplication configured bearer, and to a system at a user equipment (UE) for distributing uplink packets between a primary RLC path and a secondary RLC path in a packet duplication configured bearer.

<u>BACKGROUND</u>

In recent times, there has been an increased demand for communications with higher data rate, lower latency, and increased reliability. For example, applications such as Vehicle to infrastructure (V2X) communication, Extended Reality (XR) traffic, etc., rely on efficient communication for their operations. To meet such demands, communication using dynamic dual connectivity with feature of packet duplication has been introduced. The packet duplication may be activated and de-activated based on network load. For instance, the packet duplication may be deactivated to save resources where signal strength/quality is good and packet duplication may be activated to allocate resources where signal quality is poor.

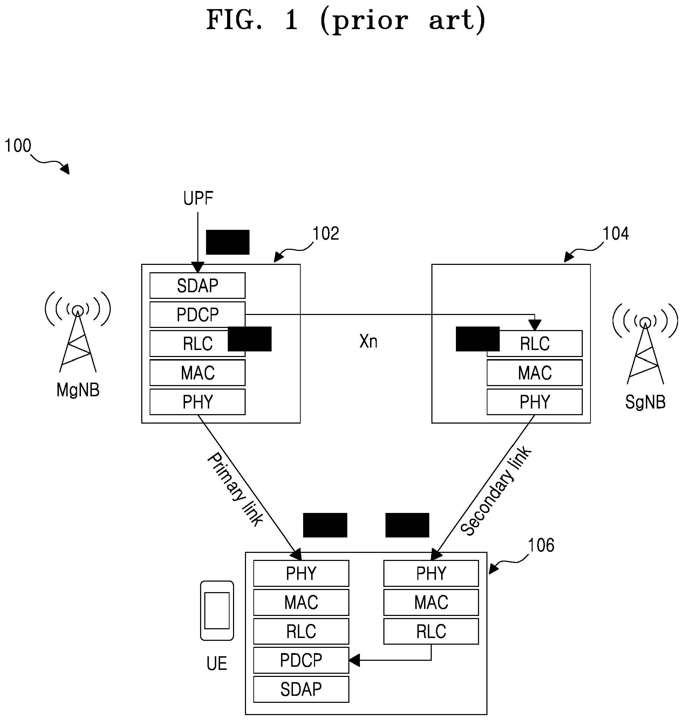

FIG. 1 illustrates a block diagram 100 depicting a known scenario, where the functionality of packet duplication may be achieved between a user equipment in dual connectivity with a network, wherein higher layer packet, say, an internet protocol-protocol data unit (IP-PDU) is transmitted over two distinct paths. The distinct paths may include a primary or master node MgNB 102, and a secondary node SgNB 104. Based on packet duplication being turned ON, a packet data convergence protocol (PDCP) entity duplicates and forwards the PDCP PDU to a lower layer carrying the same IP PDU (or similar IP PDUs) over two radio link control (RLC) entities, e.g., primary and secondary links. Further, based on the duplication being OFF, the PDCP entity refrains from duplication and instead splits the IP PDUs over the two RLC entities, e.g., in a split bearer configuration. The activation or deactivation of the packet duplication may be configured through RRC reconfiguration and/or dynamically adjusted using a medium access control (MAC) element at runtime. In an example, in response to duplication being deactivated dynamically, duplicated non-transmitted packets are discarded from a secondary RLC path and the user equipment 106 falls back to normal split behavior. It leads to unequal data distribution between primary and secondary RLC paths which could lead to packet drop on the network side based on a reordering timer being configured. While duplication is active, handling an RLC status report at a peer RLC leads to RLC sequence number (SN) hole creation in it. PDCP entity duplicates the PDU such that the duplicated packets carry the same packet data convergence protocol sequence number (PDCP SN) (or similar PDCP SNs). Details regarding the discarding of duplicate PDUs are provided in 3rd Generation Partnership Project (3GPP) specification 38.323, section 5.11.2.

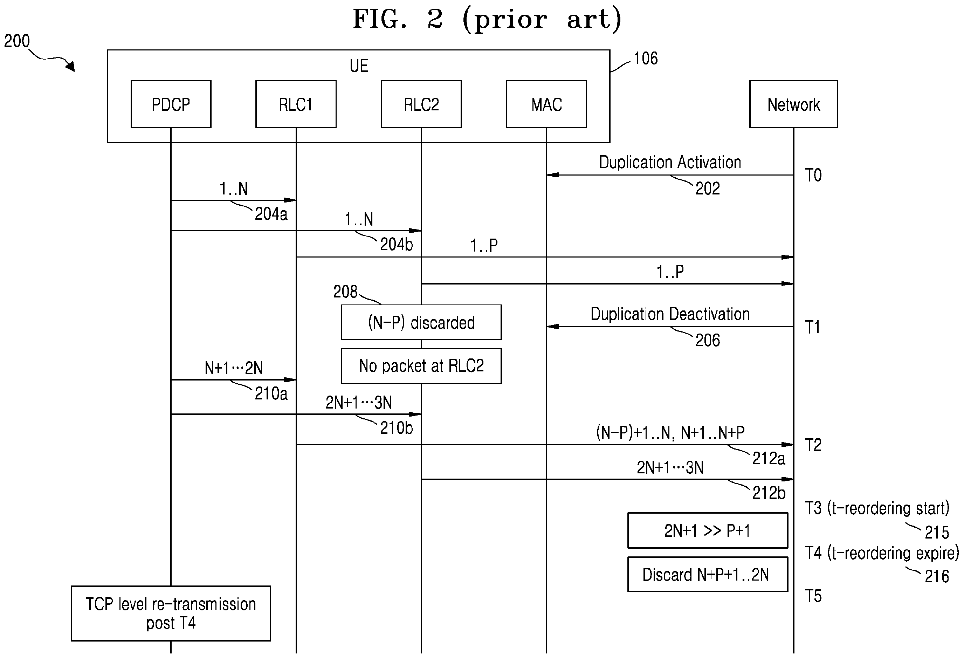

FIG. 2 illustrates a process flow 200 depicting a known scenario for communication between the UE 106 and the network (master node MgNB 102 and secondary node SgNB 104). Based on duplication being activated at time (T0) 202, the PDCP entity at the UE 106 sends packets with the same sequence number (SN) (or similar sequence numbers) over both primary and secondary paths, e.g., over both RLC1 and RLC2, as shown by operations 204a, 204b. The packets, say 1...P packets are then transmitted to the network by both the RLC1 and RLC2. For instance, the packets may be transmitted in accordance with the respective data rates at the RLC1 and RLC2. At operation 206 (T1), a duplication deactivation indication may be sent by the network to the MAC entity at the UE 106. Upon receiving the duplication deactivation indication, the duplicate (N-P) packets that have not yet been transmitted are removed from the RLC2, as depicted at operation 208 in Figure 2. According to 3GPP specification, based on duplication being deactivated, duplicated PDUs from the RLC2 are discarded if they have not been transmitted. Thus, there is no packet at the RLC2. Further, as the UE 106 operates in split bearer mode, say at time T1+1, the PDCP entity splits packets N+1 ...2N and packets 2N+1 ...3N over the RLC1 and RLC2, as shown at operations 210a and 210b respectively.

Further, as shown at operations 212a and 212b, at time T2 out-of-sequence packet 2N+1 onwards is received at the network over the RLC2 while packet P+1 onwards is received at the network over the RLC1. At time T3, as shown at operation 214, a Sequence Number (SN) gap is detected at the network, resulting in triggering of re-ordering timer. At time T4, as shown at operation 216, the reordering timer expires, the network reorders all the received PDUs and move the receive variable state leading to the discarding of all packets less than 2N+1 post expiry, resulting in a data stall. That is, considering without loss of generality that the data rate over both of the paths is still the same (or similar), then 2N+1..3N is received via RLC2 and P+1..N, N+1..N+P is received via RLC1. So the packets between N+P+1 to 2N if received via RLC1 post reorder timer expiry would be discarded and would cause TCP traffic stall as they would be recovered by TCP retransmission.

As shown in FIG. 2, post de-activation, load imbalance may be observed between the RLC1 and RLC2, consequently, the RLC1 may have only duplicated packets, while the RLC2 remains empty, indicative of an overloaded primary path and an underutilized secondary path. This challenge may further be enhanced in case the data rate in RLC1 is poorer as compared to RLC2. Further, post time T1, there is an ineffective resource utilization at the RLC2. Although the bearer has reverted to a split behavior, it continues to receive network grants based on its RLC buffer. However, the buffer is empty, indicating a mismatch between network grants and the actual buffer state, leading to inefficient use of resources at the RLC2.

Furthermore, post duplication deactivation, the bearer reverts to split behavior, directing new packets to the RLC2 while the primary RLC path transmits older duplicate packets. That is, later received packets on the RLC2 may be sent whereas the RLC1 may be sending the earlier packets. Consequently, the receiving PDCP entity (at the network) may experience a PDCP sequence number jump, initiating the re-ordering timer. Thus, it may be perceived that a strict restriction is being imposed on the RLC1 network scheduler to receive all the old packets in a time-bound fashion limited by the PDCP reorder timer value. Otherwise, it would cause a PDCP packet loss which could only be recovered by a TCP level retransmission. In case the reordering timer expires, further received packets may get discarded leading to data stall. For instance, at time T5, TCP-level re-transmissions are initiated to recover data, further causing a drop-in data rate.

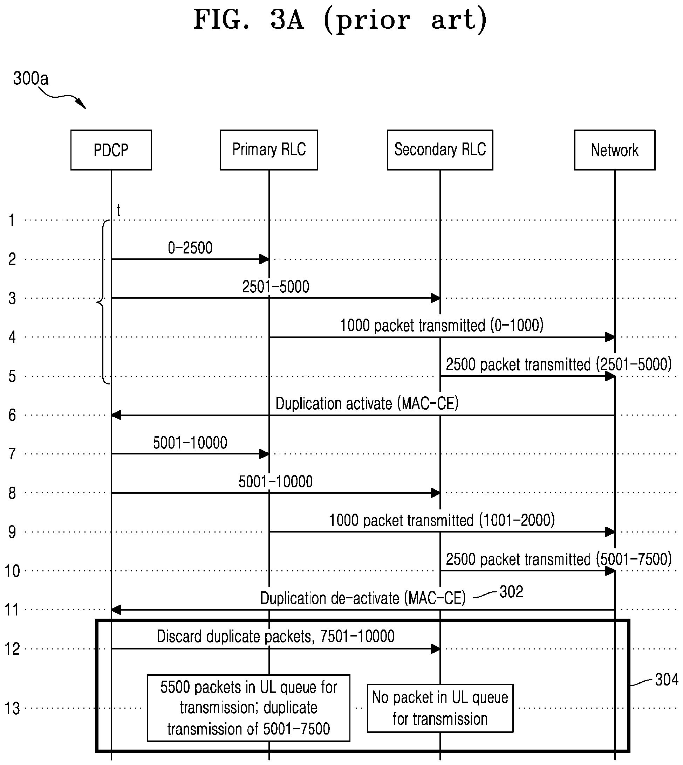

FIG. 3A illustrates a process flow 300a depicting a known scenario of communication between the UE and the network leading to overloaded primary path and an underutilized secondary path, according to existing techniques. As seen in FIG. 3A, uplink packets are transmitted over the RLC1 and the RLC2. Prior to the PDCP entity receiving a duplication deactivation signal from the network, packets 1001-2000 are transmitted over the RLC1 and packets 5001-7500 are transmitted over the RLC2. Based on a duplication deactivation signal being received, at operation 302, the PDCP entity discards all the non-transmitted duplicate PDUs only from the RLC2 and no discard is performed from the RLC1. Discarding PDUs without considering the split threshold would lead to overload on the RLC1 and underutilization of the RLC2. In the present example, based on duplication being deactivated, non-transmitted duplicate packets 7501-10000 are discarded from RLC2 at operation 304. The RLC1 includes 5500 packets in queue for uplink transmission (out of which 2500 UL packets are already transmitted by RLC2) while the RLC2 includes no packets in the queue for uplink transmission. Further, there could be duplicate PDUs currently under transmission on the RLC2 (hence not discarded) which would also be transmitted over the RLC1 as well thus displaying duplication behavior in situations in which such is not intended.

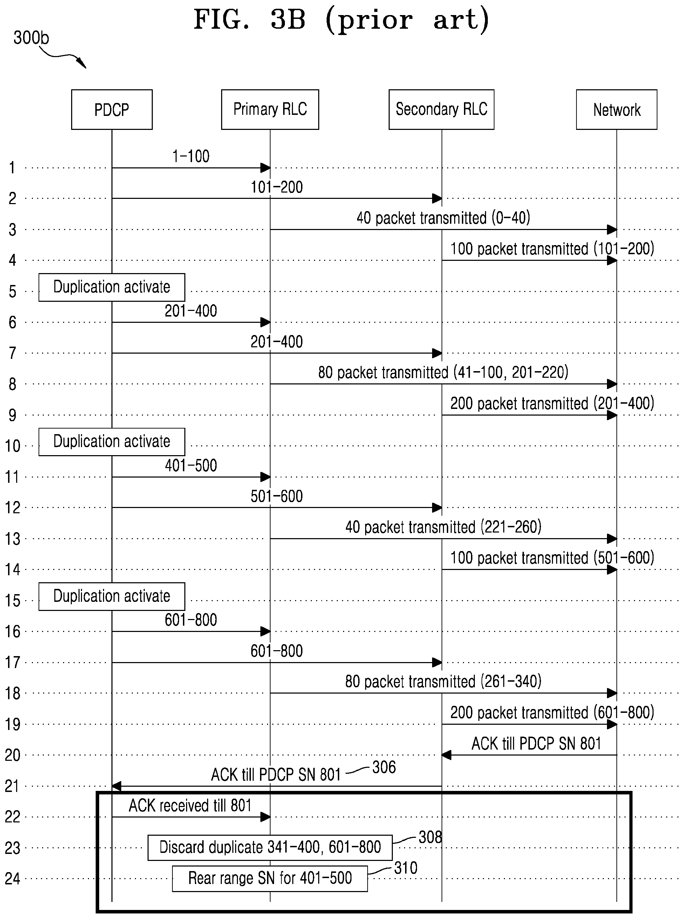

FIG. 3B illustrates a process flow 300b depicting a known scenario of communication between the UE and the network leading to additional overhead due to frequent activation and deactivation, according to existing techniques. As seen in FIG. 3B, uplink packets are transmitted over the RLC1 (primary RLC) and the RLC2 (secondary RLC). Prior to the PDCP entity receiving an acknowledgment at operation 306, packets 261-340 are transmitted over the RLC1 and packets 601-800 are transmitted over the RLC2. The acknowledgment of Sequence Numbers (SN) 801 is received by the RLC2 at operation 306. Based on duplication being activated and an RLC status report is received on one path (here, RLC2), the same information (or similar information) is conveyed to the peer RLC (here, RLC1), prompting the discarding of duplicate packets that have already been acknowledged but not yet transmitted. As shown at operations 308 and 310, the duplicate packets 341-400 and 601-800 are discarded at the RLC1 and the SN for 401-500 is to be rearranged.

In the context of New Radio (NR) RLC, where RLC headers are pre-generated and SNs are assigned in advance before receiving a grant from the network. Discarding of the non-transmitted duplicate packets creates gaps in the RLC SN window. For proper RLC operation, the gaps need to (or should) be rectified. In instances of frequent duplication deactivation, each RLC needs to (or should) maintain additional duplication information for each PDU. This, in turn, imposes an extra burden on memory and processing resources at the UE 106, leading to additional overhead, a factor that becomes even more substantial in scenarios involving frequent duplication activation and deactivation.

## SUMMARY

The invention is defined by the claims. Preferred embodiments are defined by the dependent claims.

The summary of embodiments below is provided to introduce methods, in a simplified format, that are further described in the detailed description of the inventive concepts. This summary is neither intended to identify key or essential inventive concepts nor is it intended for determining the scope of the invention. Embodiments provide techniques that overcome the above-discussed challenges related to distributing uplink packets between the primary RLC path and the secondary RLC path in a packet duplication configured bearer.

In embodiments, a method for distributing uplink packets between a primary Radio Link Control (RLC) path and a secondary RLC path in a packet duplication configured bearer is disclosed. The method includes transmitting, by a user equipment (UE), the uplink packets over the primary RLC path and the secondary RLC path as duplicate packets, dynamically receiving, at the UE from a network entity, a deactivation signal via a Medium Access Control (MAC) control element or a Radio Resource Control (RRC) reconfiguration, the deactivation signal indicating deactivation of packet duplication, and discarding, at the UE, one or more non-transmitted duplicate packets from the primary RLC path and the secondary RLC path based on a discard ratio in response to receiving the deactivation signal, the discard ratio being indicative of a packet discarding proportion between the primary RLC path and the secondary RLC path.

In embodiments, a system at a user equipment (UE) for distributing uplink packets between a primary Radio Link Control (RLC) path and a secondary RLC path in a packet duplication configured bearer is disclosed. The system includes processing circuitry configured to transmit the uplink packets over the primary RLC path and the secondary RLC path as duplicate packets, dynamically receive, from a network entity, a deactivation signal via a Medium Access Control (MAC) control element or a Radio Resource Control (RRC) reconfiguration, the deactivation signal indicating deactivation of packet duplication, and discard one or more non-transmitted duplicate packets from the primary RLC path and the secondary RLC path based on a discard ratio in response to receiving the deactivation signal, the discard ratio being indicative of a packet discarding proportion between the primary RLC path and the secondary RLC path.

To further clarify the advantages and features of the inventive concepts, a more particular description of some inventive concepts will be rendered by reference to specific examples thereof, which are illustrated in the appended drawings. It is appreciated that these drawings depict only typical examples of the inventive concepts and are therefore not to be considered limiting of the scope of the invention. Embodiments of the inventive concepts will be described and explained with additional specificity and detail in the accompanying drawings.

## BRIEF DESCRIPTION OF THE DRAWINGS

These and other features, aspects, and advantages of embodiments of the inventive concepts will become better understood when the following detailed description is read with reference to the accompanying drawings in which like characters represent like parts throughout the drawings, wherein:

FIG. 1 illustrates a block diagram depicting a known scenario, where the functionality of packet duplication may be achieved between a user equipment in dual connectivity with a network, according to existing techniques.

FIG. 2 illustrates a process flow depicting a known scenario for communication between the UE 106 and the network (master node MgNB and secondary node SgNB), according to existing techniques.

FIG. 3A illustrates a process flow depicting a known scenario of communication between the UE and the network leading to an overloaded primary path and an underutilized secondary path, according to existing techniques.

FIG. 3B illustrates a process flow depicting a known scenario of communication between the UE and the network leading to additional overhead due to frequent activation and deactivation, according to existing techniques.

FIG. 4 illustrates an example block diagram of a communication environment depicting a configuration of a network entity and a user equipment (UE), according to embodiments disclosed herein;

FIG. 5 illustrates an example block diagram of a various elements at a user equipment (UE) involved in distributing uplink packets between a primary Radio Link Control (RLC) path and a secondary RLC path in a packet duplication configured bearer, according to embodiments disclosed herein;

FIG. 6 illustrates a process for distributing uplink packets over the primary RLC path and the secondary RLC path using a discard ratio, according to embodiments disclosed herein;

FIG. 7 illustrates an example diagram depicting discarding of packets based on the current duplication active window based on an RLC status report being received on the secondary RLC path, according to embodiments disclosed herein;

FIG. 8 illustrates the flow chart of a method for distributing uplink packets between a primary Radio Link Control (RLC) path and a secondary RLC path in a packet duplication configured bearer, according to embodiments disclosed herein; and

FIG 9 illustrates the flow chart of another method for distributing uplink packets between a primary Radio Link Control (RLC) path and a secondary RLC path in a packet duplication configured bearer, according to embodiments disclosed herein.

Further, skilled artisans will appreciate that those elements in the drawings are illustrated for simplicity and may not have necessarily been drawn to scale. For example, the flow charts illustrate the method in terms of the most prominent operations involved to help to improve understanding of aspects of embodiments. Furthermore, in terms of the construction of the device, one or more components of the device may have been represented in the drawings by conventional symbols, and the drawings may show only those specific details that are pertinent to understanding embodiments of the inventive concepts so as not to obscure the drawings with details that will be readily apparent to those of ordinary skill in the art having the benefit of the description herein.

## DETAILED DESCRIPTION

For the purpose of promoting an understanding of the principles of embodiments of the inventive concepts, reference will now be made to the examples illustrated in the drawings and specific language will be used to describe the same. It will nevertheless be understood that no limitation of the scope of the invention is thereby intended, such alterations and further modifications in the illustrated system, and such further applications of the principles of embodiments of the inventive concepts as illustrated therein being contemplated as would normally occur to one skilled in the art to which the inventive concepts relate.

It will be understood by those skilled in the art that the foregoing general description and the following detailed description are explanatory of embodiments of the inventive concepts and are not intended to be restrictive of the invention.

Reference throughout this specification to "an aspect", "another aspect" or similar language means that a particular feature, structure, or characteristic described in connection with embodiments is included in at least one embodiment of the inventive concepts. Thus, appearances of the phrase "in an embodiment", "in one or more embodiments", "in another embodiment", and similar language throughout this specification may, but do not necessarily, all refer to the same embodiment.

The terms "comprise", "comprising", or any other variations thereof, are intended to cover a non-exclusive inclusion, such that a process or method that comprises a list of operations does not include only those operations but may include other operations not expressly listed or inherent to such process or method. Similarly, one or more devices or sub-systems or elements or structures or components preceded by "comprises... a" does not, without more constraints, preclude the existence of other devices or other sub-systems or other elements or other structures or other components or additional devices or additional sub-systems or additional elements or additional structures or additional components.

Embodiments herein and the various features and advantageous details thereof are explained more fully with reference to the non-limiting examples that are illustrated in the accompanying drawings and detailed in the following description. Descriptions of well-known components and processing techniques are omitted so as to not unnecessarily obscure embodiments herein. Also, the various examples described herein are not necessarily mutually exclusive, as some examples may be combined with one or more other examples to form new examples. The term "or" as used herein, refers to a non-exclusive or unless otherwise indicated. The examples used herein are intended merely to facilitate an understanding of ways in which embodiments herein may be practiced and to further enable those skilled in the art to practice embodiments herein. Accordingly, the examples should not be construed as limiting the scope of embodiments herein.

As is traditional in the field, embodiments may be described and illustrated in terms of modules or engines that carry out a described function or functions. These modules or engines, which may be referred to herein as units or blocks or the like, or may include blocks or units, may be physically implemented by analog or digital circuits such as logic gates, integrated circuits, microprocessors, microcontrollers, memory circuits, passive electronic components, active electronic components, optical components, hardwired circuits, or the like, and may optionally be driven by firmware and software. The circuits may, for example, be embodied in one or more semiconductor chips, or on substrate supports such as printed circuit boards and the like. The circuits constituting a block may be implemented by dedicated hardware, by a processor (e.g., one or more programmed microprocessors and associated circuitry), or by a combination of dedicated hardware to perform some functions of the block and a processor to perform other functions of the block. Each block may be physically separated into two or more interacting and discrete blocks without departing from the scope of the inventive concepts. Likewise, the blocks may be physically combined into more complex blocks without departing from the scope of the inventive concepts.

The accompanying drawings are used to help easily understand various technical features and it should be understood that embodiments presented herein are not limited by the accompanying drawings. As such, the present disclosure should be construed to extend to any alterations, equivalents, and substitutes in addition to those which are particularly set out in the accompanying drawings. Although the terms first, second, etc., may be used herein to describe various elements, these elements should not be limited by these terms. These terms are generally only used to distinguish one element from another.

Embodiments will be described below in detail with reference to the accompanying drawings.

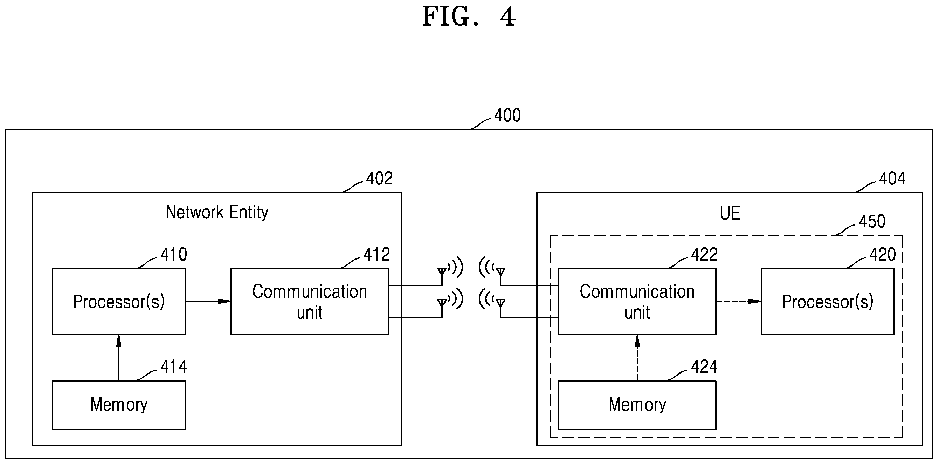

FIG. 4 illustrates an example block diagram of a communication environment 400 depicting a configuration of a network entity 402 and a user equipment (UE) 404, according to embodiments disclosed herein. The UE 404 may be in dual connectivity mode connection with the network entity 402. The configurations as disclosed in FIG. 4 may be understood as parts of the configuration of the network entity 402 and the user equipment 404. Hereinafter, it is understood that terms including "unit" or "module" at the end may refer to the unit for processing at least one function or operation and may be implemented in hardware, software, or a combination of hardware and software. According to embodiments, the network entity 402 may include one or more processor(s) 410 (also referred to herein in the singular "processor 410"), a communication unit 412 and/or a memory 414. According to embodiments, the network entity 402 may include each of a master node and a secondary node with which the UE 404 has a dual connectivity connection. According to embodiments, each of the master node and the secondary node may be implemented by the network entity 402. According to embodiments, each of the master node and the secondary node may be a base station. The base station may generally refer to a fixed station that communicates with user equipment and/or other base stations, and may exchange data and control information by communicating with user equipment and/or other base stations. For example, the base station may also be referred to as a Node B, an evolved-Node B (eNB), a next generation Node B (gNB), a sector, a site, a base transceiver system (BTS), an access point (AP), a relay node, a remote radio head (RRH), a radio unit (RU), a small cell, or the like.

According to embodiments, the network entity 402 may communicate with the UE 404 via a wireless communication network. The wireless communication network between the network entity 402 and the UE 404 may support communication between multiple users by sharing available network resources. For example, in the wireless communication network, information may be transmitted in various multiple access schemes, such as Code Division Multiple Access (CDMA), Frequency Division Multiple Access (FDMA), Time Division Multiple Access (TDMA), Orthogonal Frequency Division Multiple Access (OFDMA), Single Carrier Frequency Division Multiple Access (SC-FDMA), OFDM-FDMA, OFDM-TDMA, and OFDM-CDMA.

As an example, the processor 410 may be a single processing unit or a number of units, all of which could include multiple computing units. The processor 410 may be implemented as one or more microprocessors, microcomputers, microcontrollers, digital signal processors, central processing units, state machines, logic circuitries, and/or any devices that manipulate signals based on operational instructions. Among other capabilities, the processor 410 is configured to fetch and execute computer-readable instructions and data stored in the memory. The processor 410 may include one or a plurality of processors. At this time, one or a plurality of processors 410 may be a general-purpose processor, such as a central processing unit (CPU), an application processor (AP), or the like, and/or an AI-dedicated processor such as a neural processing unit (NPU). The processor 410 may control the processing of input data in accordance with a predefined (or alternatively, given) operating rule or artificial intelligence (AI) model stored in the non-volatile memory and the volatile memory, e.g., the memory 414. The predefined (or alternatively, given) operating rule or artificial intelligence model may be provided through training or learning.

The memory 414 may include any non-transitory computer-readable medium known in the art including, for example, volatile memory, such as static random-access memory (SRAM) and dynamic random-access memory (DRAM), and/or non-volatile memory, such as read-only memory (ROM), erasable programmable ROM, flash memories, hard disks, optical disks, and magnetic tapes. The communication unit 412 (e.g., a communicator or communication interface) may perform functions for transmitting and receiving signals.

In embodiments, the network entity 402 may be implemented as (e.g., using) dedicated hardware units. In embodiments, the network entity 402 may be implemented in the form of virtualized software units in hardware or cloud environments.

Further, the user equipment 404 may also include one or more processor(s) 420 (also, referred to as processor 420), a communication unit 422 (e.g., a communicator or communication interface), and/or a storage unit (e.g., memory 424). The communication unit 422 may perform functions for transmitting and receiving signals. The functionalities and features of the processor 420, communication unit 422, and/or memory 424 may be similar to those of the processor 410, communication unit 412, and/or memory 414, respectively. Therefore, a detailed explanation of the same is omitted herein for the sake of brevity of the present disclosure.

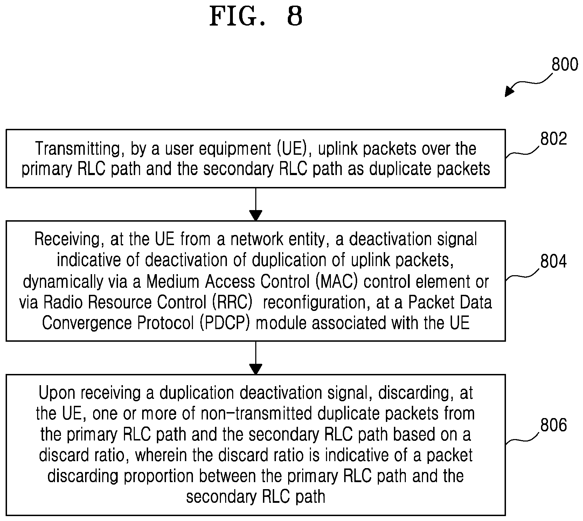

In embodiments, the UE 404 may include an application unit, a New-Radio Non-Access Stratum (NR-NAS) unit, and/or a New-Radio Radio Resource Control (NR-RRC) unit. In embodiments, the user equipment 404 may be associated with a system 450 comprising at least the processor 420 and/or the memory 424. The memory 414 may include executable instructions that, when executed by the processor 420, cause the system 450 to perform the operations as described with reference to FIGS. 8-9. Further, the system 450 may be in communication with the network entity 402 to perform the operations as described with reference to FIGS. 8-9.

According to embodiments, the UE 404 may be fixed or mobile and may refer to any device that may communicate with a base station (e.g., the network entity 402, to transmit and receive data and/or control information. For example, the UE 404 may be referred to as a terminal, a terminal equipment, a mobile station (MS), a mobile terminal (MT), a user terminal (UT), a subscriber station (SS), a wireless device, a handheld device, or the like.

The method disclosed herein provides various technical advantages and benefits such as a dynamic approach to the duplication of uplink packets. The user equipment (UE) receives a deactivation signal from the network entity, either through a Medium Access Control (MAC) control element or via Radio Resource Control (RRC) reconfiguration and performs real-time adjustments in packet duplication, as will be described in detail further below.

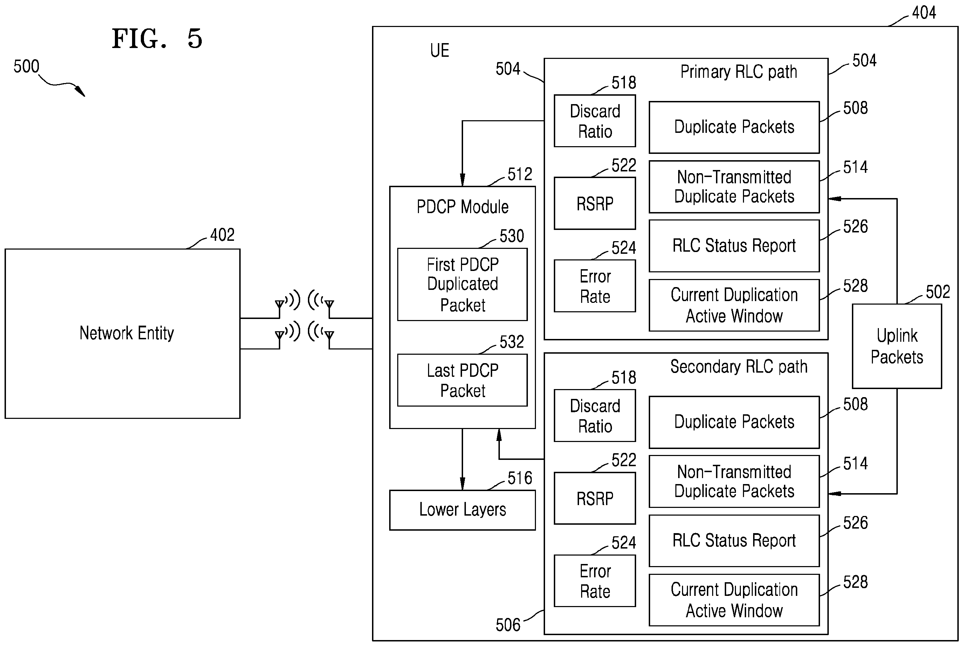

FIG. 5 illustrates an example block diagram of a various elements at a user equipment (UE) involved in distributing uplink packets between a primary Radio Link Control (RLC) path and a secondary RLC path in a packet duplication configured bearer, according to embodiments disclosed herein. Details of the present disclosure will be described in conjunction with FIGS. 4-5.

In embodiments, the UE 404 may be configured to transmit uplink packets 502 over a primary RLC path 504 and a secondary RLC path 506. The uplink packets 502 may be transmitted as duplicate packets 508 based on packet duplication being activated, e.g., based on an activation signal being received at the UE 404 from the network entity 402. The packet duplication may remain activated till a deactivation signal is received. The deactivation signal indicative of the deactivation of packet duplication may be received from the network entity 402 at the UE 404 via a Medium Access Control (MAC) control element at a Packet Data Convergence Protocol (PDCP) module 512 associated with the UE. In embodiments, the deactivation signal may be received via Radio Resource Control (RRC) reconfiguration. Further, upon receiving the duplication deactivation signal, non-transmitted duplicate packets 514 may be discarded from the primary RLC path 504 and the secondary RLC path 506 based on a discard ratio 518. In embodiments, the discard ratio 518 may be indicative of a packet discarding proportion between the primary RLC path 504 and the secondary RLC path 506. The discard ratio 518 may be a static ratio or a dynamic ratio.

The processor 420 may be configured to compute a time required (or used) to transmit the uplink packets 502, submitted by the PDCP module 512 to lower layers 516 associated with the UE 404, over the primary RLC path 504. Further, the processor 420 may be configured to compare the computed time with a reordering timer value associated with a PDCP reordering value configured for the bearer by the network entity 402. The computed time to transmit the uplink packets 502 is based upon one or more of an instantaneous data rate or an averaged data rate on the primary RLC path 504 over a time period T. The time period T may include a non-zero value in milliseconds (ms). In embodiments of the present disclosure, upon a determination that the time required (or used) to transmit the uplink packets 502 over the primary RLC path 504 is less than the reordering timer value, one or more of the non-transmitted duplicate packets 514 are discarded selectively from the primary RLC path 504 and the secondary RLC path 506 based on the discard ratio 518.

The processor 420 may be configured to compute the discard ratio 518, wherein the discard ratio 518 is inversely proportional to a data rate over both the primary RLC path 504 and the secondary RLC path 506 respectively. The discard ratio 518 may be a static ratio or a dynamic ratio.

The discard ratio 518 may be computed based upon multiple factors, such as but not limited to maximum available duplicated data (or a highest amount of duplicated data) over both the primary RLC path 504 and the secondary RLC path 506 (D), the data rate on both the paths (DRp, DRs respectively), PDCP reordering timer (Tr), a split threshold (a non-infinite value), and time taken by the primary RLC path 504 to transmit all the duplicated packets (Tp).

Considering a scenario where Tp > Tr, there is a high chance of data stall and hence it is essential (or desirable) to compute the discard ratio 518 and distribute the uplink packets based on the discard ratio. Considering a scenario where Tp < Tr, the secondary RLC path 506 may not be used, thereby reducing the overall data rate. Hence, it is also essential (or desirable) to compute the discard ratio 518 and distribute the uplink packets based on the discard ratio. In embodiments, the discard ratio may be defined by the equation (1) below:

$$\text{Discard Ratio } 518 = Tr*DRp : D - Tr*DRp \ldots (1)$$

Further, the processor 420 may be configured to determine the maximum (or highest amount of) available RLC data over both the primary RLC path 504 and the secondary RLC path 506. The processor 420 may further be configured to determine whether the split threshold configured for the bearer by the network entity 402 is smaller than the total data available for transmission at the PDCP module 512. Furthermore, processor 420 may be configured to discard, the non-transmitted duplicate packets 514 over both the primary RLC path 504 and the secondary RLC path 506, in proportion to the discard ratio 518 and adjust RLC Sequence Numbers (SNs) associated with the uplink packets 502 post discarding of the non-transmitted duplicate packets 514 at both the primary RLC path 504 and the secondary RLC path 506. As a result, RLC SN gaps are prevented or reduced.

In accordance with another example to prevent or reduce RLC SN gaps, the processor 420 may be configured to receive the deactivation signal indicative of deactivation of duplication of uplink packets and enable the secondary RLC path 506 to discard all the packet on receiving the deactivation signal. Further, the processor 420 may be configured to enable the primary RLC path 504 to estimate the pending non-transmitted duplicate packets at the time of deactivation of the duplication of uplink packets. The pending non transmitted duplicate packets may be submitted to the peer RLC (in this case, the secondary RLC path 506). The primary RLC based header may be removed for transmission and the peer RLC (in this case, the secondary RLC path 506) adds the secondary RLC based header. The uplink packets are then transmitted over the secondary RLC path 506.

In accordance with yet another example to prevent (or reduce) RLC SN gaps, the non-transmitted duplicated RLC service data units (SDUs) may be sent to the PDP module which distributes the packets among the primary RLC path

504 and the secondary RLC path 506. In particular, the processor 420 may be configured to determine the maximum (or highest amount of) available non-transmitted duplicated packets 514 over both the primary RLC path 504 and the secondary RLC path 506. Further, the processor 420 may be configured to determine whether the split threshold configured for the bearer by the network entity 402 is smaller than the total data available for transmission at the UE 404.

The processor 420 may be configured to submit the non-transmitted duplicated RLC SDUs to the PDCP module 512 to redistribute over both the primary RLC path 504 and the secondary RLC path 506. Further, the PDCP module 512 may submit the packets (e.g., the uplink packets) to lower layers 516 associated with the UE 404 over both the primary RLC path 504 and the secondary RLC path 506 in an increasing COUNT manner. The RLC SNs associated with the packets at both the primary RLC path 504 and the secondary RLC path 506 may then be managed to prevent (or reduce) RLC SN gaps.

In embodiments, availability and non-availability of new packets for transmission may be considered to distribute the packets among the primary RLC path 504 and the secondary RLC path 506. In embodiments, the time required (or used) to transmit the uplink packets 502 submitted by the PDCP module 512 to the lower layers 516 over the primary RLC path 504 (also referred to herein as "a transmission time duration") may be compared with a reordering timer value associated with a PDCP reordering value (reordering timer) configured for the bearer by the network entity 402. According to embodiments, the transmission time duration may be an amount of time taken to transmit the uplink packets 502 to the lower layers 516 (and/or to transmit the uplink packets 502 from/outside the UE 404). The processor 420 may be configured to determine one of availability or non-availability of new packets for transmission at the UE 404 upon a determination that the time required (or used) to transmit the uplink packets 502 over the primary RLC path 504 is greater than the reordering timer value.

As described above, the discard ratio 518 may be a static ratio or a dynamic ratio. The static ratio may be used in case of non-availability of new packets for transmission while the dynamic ratio may be used in case of availability of new packets for transmission. That is, the processor 420 may be configured to discard the non-transmitted duplicate packets 514 from the primary RLC path 504 and the secondary RLC path 506 based on the discard ratio 518 (static ratio) upon a determination of non-availability of the new packets for transmission at the UE 404. Further, the processor 420 may be configured to discard the one or more of the non-transmitted duplicate packets 514 from the primary RLC path 504 and the secondary RLC path 506 based on the discard ratio 518 (dynamic ratio) upon a determination of the availability of the new packets at the PDCP module 512 for transmission at the UE 404.

In embodiments of the present disclosure, a Reference Signal Received Power (RSRP) 522 and/or an error rate 524 (e.g., one or more of the RSRP and/or the error rate) associated with the primary RLC path 504 and the secondary RLC path 506 may be considered to distribute the packets among the primary RLC path 504 and the secondary RLC path 506. The RSRP 522 and the error rate 524 may be monitored for the time required (or used) to transmit uplink packets 502 over the primary RLC path 504. Further, the processor 420 may be configured to determine whether the one or more of the RSRP 522 and the error rate 524 is meeting (or meets) a consistency threshold value. According to embodiments, the one or more of the RSRP 522 and/or the error rate 524 may meet the consistency threshold value based on the one or more of the RSRP 522 and/or the error rate 524 being equal to or greater than the consistency threshold value. Furthermore, the processor 420 may be configured to modify the discard ratio 518 based on one or more of the RSRP 522 and/or the error rate 524 upon a determination that the one or more of the RSRP 522 and/or error rate 524 is meeting (or meets) the consistency threshold. Also, the processor 420 may be configured to discard the non-transmitted duplicate packets 514 from the primary RLC path 504 and the secondary RLC path 506 based on the modified discard ratio 518. According to embodiments, the error rate 524 may be a block error rate (BLER).

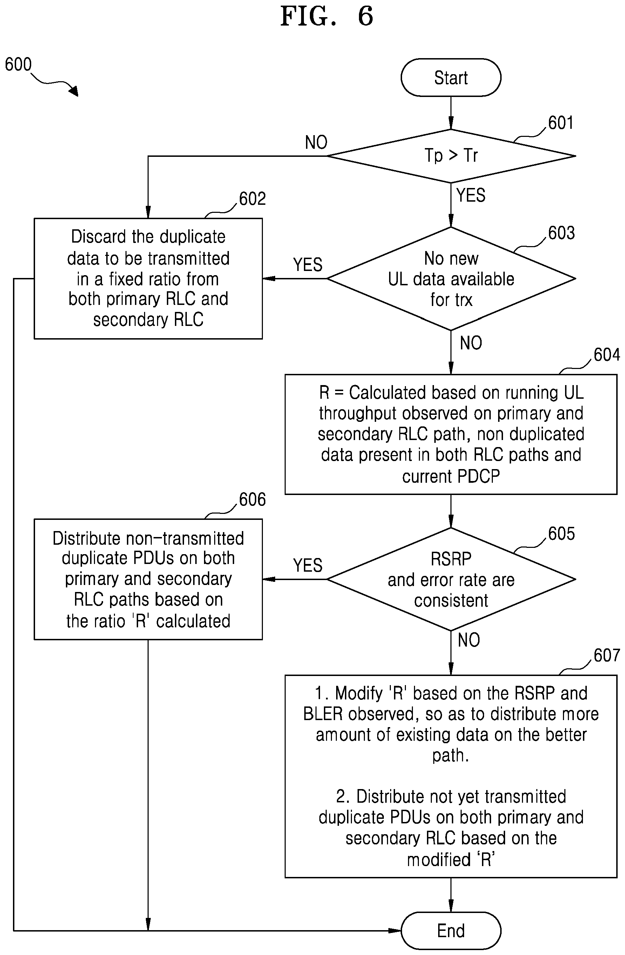

Reference is made to FIG. 6 to explain the above-mentioned examples in more detail. FIG. 6 illustrates a process 600 for distributing uplink packets over the primary RLC path 504 and the secondary RLC path 506 based on the discard ratio, according to embodiments disclosed herein. In order to perform proper distribution of uplink packets at the time of duplication deactivation, the discard ratio may be calculated and utilized, in that, the number of packets to be distributed over each of the primary RLC path 504 and the secondary RLC path 506 is decided using the discard ratio (R).

Initially, at operation 601, it is determined whether the time taken to transmit PDUs in the primary path (Tp) is greater than the value of the reordering timer (Tr) configured by the network entity. In case the time taken to transmit PDUs in the primary path is not greater than the value of the reordering timer (Tp<Tr), then the duplicated packets to be transmitted are discarded based on a static (or fixed) ratio from both the primary RLC path 504 and the secondary RLC path 506 in operation 602. The process 600 may then end.

In case the time taken to transmit PDUs in the primary path is greater than the value of the reordering timer (Tp>Tr), then, then at operation 603, it is determined whether uplink data (new packets) are available for transmission to the network entity 402. In case new uplink data is not available for transmission, then the process may continue to operation 602 where, as mentioned above, the duplicated packet to be transmitted are discarded based on a static ratio from both the primary RLC path 504 and the secondary RLC path 506.

In case new uplink data is available for transmission, then the process continues at operation 604 where the discard ratio is calculated as a dynamic value. The discard ratio may be calculated based on running uplink (UL) throughput observed on primary and secondary RLC paths, non-duplicated data present in both RLC paths, and/or the current PDCP.

At operation 605, it is determined whether the RSRP 522 and/or error rate 524 are consistent. If the RSRP 522 and/or error rate 524 are consistent, then the process continues at operation 606 where the non-transmitted duplicate PDUs are distributed on both primary and secondary RLC paths based on the calculated discard ratio. The process may then end.

If the RSRP 522 and/or error rate 524 are not consistent, then the process continues at operation 607 where the calculated discard ratio is modified based on the RSRP and/or error rate (e.g., BLER) observed. Further, the non-transmitted duplicate PDUs are distributed on both primary and secondary RLC paths based on the modified discard ratio, thereby ensuring (or increasing the likelihood) that a greater amount of existing data is provided on the better path from among the primary and secondary RLC paths. The process may then end. According to embodiments, subsequent to the process, the UE 404 may transmit the non-transmitted duplicate PDUs via the primary RLC path and/or the secondary RLC path. According to embodiments, for example, the transmission of the non-transmitted duplicate PDUs may include signal processing operations such as modulating, upconverting, filtering, amplifying and/or encrypting.

Referring again to FIGS. 4-5, in embodiments of the present disclosure, the PDCP module 512 maintains information regarding the latest duplication active window which indicates the range of PDUs being sent as duplicate. The range may be updated at each duplication activation and deactivation time. In response to a RLC status report being received (while duplication is active) on one of the primary or secondary RLC paths, the not yet transmitted duplicate packets are discarded from the peer RLC path (other of the primary or secondary RLC paths) only from the current duplication active window.

The processor 420 may be configured to receive an RLC status report 526 on either one of the primary RLC path 504 or the secondary RLC path 506. The RLC status report 526 is indicative of an acknowledgment of transmission of the uplink packets 502 to the network entity 402. Further, the processor 420 may be configured to send an indication to the peer RLC path from among the primary RLC path 504 and the secondary RLC path 506, for discarding non-transmitted duplicate packets 514 acknowledged by the RLC status report 526. In embodiments, when the RLC status report 526 is received on the primary RLC path 504, the peer path is the secondary RLC path 506, and when the RLC status report 526 is received on the secondary RLC path 506, the peer path is the primary RLC path 504. According to embodiments, the RLC status report is received on one among the primary RLC path 504 and the secondary RLC path 506 different from the peer path. Further, the processor 420 may be configured to detect a current duplication active window 528 associated with the peer RLC path from among the primary RLC path 504 or the secondary RLC path 506.

In embodiments, the current duplication active window 528 may be indicative of a range of uplink PDCP COUNTs being transmitted as duplicate packets 508 over the primary RLC path 504 and the secondary RLC path 506. According to embodiments, the uplink PDCP COUNTs may include a separate PDCP COUNT for each of the primary RLC path 504 and the secondary RLC path 506. Each of the PDCP COUNTs may be initialized at '0' and may increment by '1' each time a packet is transmitted from the corresponding path. Further, the processor 420 may be configured to discard the non-transmitted and acknowledged duplicate packets 514 from the peer RLC path from among the primary RLC path 504 or the secondary RLC path 506 based on the detected current duplication active window 528.

The current duplication active window 528 may be maintained either on receiving the Medium Access Control (MAC) control element activating the PDCP duplication or on receiving a Radio Resource Control (RRC) reconfiguration with the PDCP duplication actives for the bearer with packet duplication configured with the UE 404.

In embodiments, the current duplication active window 528 is marked by a COUNT associated with a first PDCP duplicated packet 530 transmitted by a PDCP module 512 to the lower layers 516 associated with the UE 404 on receiving a PDCP Duplication activation command to a COUNT associated with a last PDCP packet 532 transmitted by the PDCP module 512 to the lower layers 516 just before the deactivation of the PDCP duplication. In embodiments, the current duplication active window 528 is continually updated upon receiving the deactivation signal indicative of the deactivation of duplication of uplink packets 502 and/or an activation signal indicative of activation of duplication of uplink packets 502.

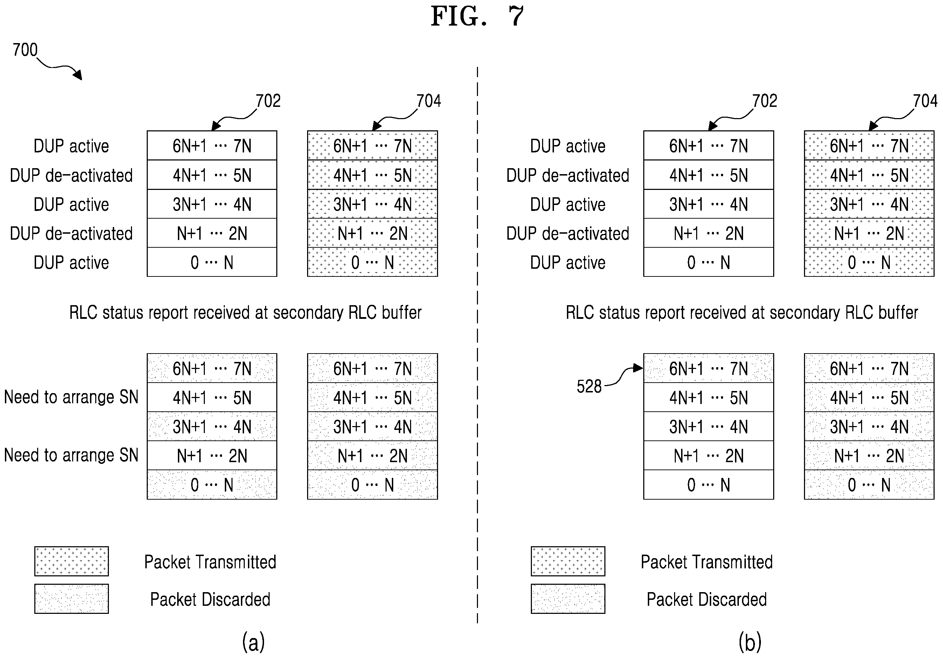

FIG. 7 illustrates an example diagram 700 depicting discarding of packets based on the current duplication active window based on an RLC status report being received on the secondary RLC path, according to embodiments disclosed herein. The example diagram 700 also depicts a comparison of known scenario of discarding packets in part (a) of FIG. 7 while part (b) of FIG. 7 illustrates the scenario as per the present disclosure. As seen in part (a) as per the known scenario, frequent duplication activation and deactivation has occurred and packets are present in the primary RLC buffer 702 and the secondary RLC buffer 704. The packets on the secondary RLC buffer 704 are transmitted. At a time T1, an RLC status report is received on the secondary RLC buffer 704. In the known scenario, based on the RLC status report being received (during duplication active) on the secondary RLC buffer 704, the same is indicated to the primary RLC buffer 702 which in turn needs to discard (or discards) the not yet transmitted duplicate packets for which ACK is indicated by the RLC status report. This leads to SN hole generation in peer RLC entities. To avoid (or reduce) SN hole creation, the UE 404 first needs to pause (or pauses) transmission for the peer RLC, rearrange the SN, and then resume (or resumes) transmission again. According to embodiments, the primary RLC buffer 702 and the secondary RLC buffer 704 may be included in the UE 404 (e.g., in the memory 424).

As seen in part (b), frequent duplication activation and deactivation has occurred and packets are present in the primary RLC buffer 702 and the secondary RLC buffer 704. The packets on the secondary RLC buffer 704 are transmitted. At the time T1, an RLC status report is received on the secondary RLC buffer 704. However, as per the present disclosure, the PDCP module maintains the information of current duplication active window 528 which indicates the range of PDUs being sent as duplicate which is updated at each duplication activation and/or deactivation time. When the RLC status report is received (e.g., in response to receiving the RLC status report) when (e.g., while) duplication is active, the primary RLC buffer 702 discards the not yet transmitted duplicate packets only from the current duplication active window 528. Thus, SN hole generation is prevented or reduced.

Figure 8 illustrates the flow chart of method 800 for distributing uplink packets between a primary Radio Link Control (RLC) path and a secondary RLC path in a packet duplication configured bearer, according to embodiments disclosed herein. The method 800 may be performed at the UE 404. The method 800 may be performed by the system 450 comprising the processor 420 and the memory 424 of the UE 404.

At block 802, the method 800 comprises transmitting, by the UE 404, uplink packets over the primary RLC path and the secondary RLC path as duplicate packets.

At block 804, the method 800 comprises receiving, at the UE 404 from the network entity 402, a deactivation signal indicative of the deactivation of duplication of uplink packets, dynamically via a Medium Access Control (MAC) control element or via RRC reconfiguration, at a Packet Data Convergence Protocol (PDCP) module associated with the UE.

At block 806, the method 800 comprises, upon receiving a duplication deactivation signal, discarding, at the UE 404, one or more of the non-transmitted duplicate packets from the primary RLC path and the secondary RLC path based on a discard ratio. The discard ratio is indicative of a packet discarding proportion between the primary RLC path and the secondary RLC path. According to embodiments, subsequent to block 806, the UE 404 may transmit the non-transmitted duplicate PDUs via the primary RLC path and/or the secondary RLC path. According to embodiments, for example, the transmission of the non-transmitted duplicate PDUs may include signal processing operations such as modulating, upconverting, filtering, amplifying and/or encrypting.

In embodiments, the method 800 further comprises computing a time required (or used) to transmit the uplink packets, submitted by the PDCP module to lower layers associated with the UE, over the primary RLC path, comparing the computed time with a reordering timer value associated with a PDCP reordering value configured for the bearer by the network entity; wherein the computed time to transmit the uplink packets is based upon one or more of an instantaneous data rate or an averaged data rate on the primary RLC path over a time period, and upon a determination that the time required (or used) to transmit the uplink packets over the primary RLC path is less than the reordering timer value, discarding the one or more of the non-transmitted duplicate packets selectively from the primary RLC path and the secondary RLC path based on the discard ratio.

In embodiments, the method 800 further comprises computing the discard ratio, wherein the discard ratio is inversely proportional to a data rate over both the primary RLC path and the secondary RLC path respectively, determining, a maximum (or highest amount of) available RLC data over both the primary RLC path and the secondary RLC path, determining, whether a split threshold configured for the bearer by the network entity is smaller than a total data available for transmission at the PDCP module, discarding, the non-transmitted duplicate packets over both the primary RLC path and the secondary RLC path, in proportion to the discard ratio; and adjusting RLC Sequence Numbers (SNs) associated with the uplink packets (e.g., uplink packets not previously transmitted) post discarding of the non-transmitted duplicate packets at both the RLC primary path and the secondary RLC path, thereby preventing (or reducing) RLC SN gap.

In embodiments, the method 800 further comprises determining the maximum (or highest amount of) available non-transmitted duplicate packets over both the primary RLC path and the secondary RLC path, determining, whether a split threshold configured for the bearer by the network entity is smaller than the total data available for transmission at the UE, submitting the non-transmitted duplicated RLC SDUs to the PDCP module to redistribute over both the primary RLC path and the secondary RLC path, submitting, by the PDCP module, the packets to lower layers associated with the UE over both the primary RLC path and the secondary RLC path in an increasing COUNT manner, and managing the RLC Sequence Numbers (SNs) associated with the uplink packets at both the primary RLC path and the secondary RLC path, thereby preventing (or reducing) RLC SN gap.

In embodiments, the method 800 further comprises comparing the time required (or used) to transmit the uplink packets submitted by the PDCP to lower layers associated with the UE over the primary RLC path with a reordering timer value associated with a PDCP reordering value configured for the bearer by the network entity, upon a determination that the time required (or used) to transmit the uplink packets over the primary RLC path is greater than the reordering timer value, determining one of availability or non-availability of new packets for transmission at the UE, and upon a determination of non-availability of the new packets for transmission at the UE, discarding the non-transmitted duplicate packets from the primary RLC path and the secondary RLC path based on the discard ratio.

In embodiments, the method 800 further comprises a determination of the availability of the new packets at the PDCP for transmission at the UE: discarding one or more of the non-transmitted duplicate packets from the primary RLC path and the secondary RLC path based on the discard ratio.

In embodiments, the method 800 further comprises monitoring one or more of the Reference Signal Received Power (RSRP) and an error rate associated with the primary RLC path and the secondary RLC path for the time required (or used) to transmit uplink packets over the primary RLC path, determining whether the one or more of the RSRP and the error rate is meeting (or meets) a consistency threshold value, upon a determination that the one or more of the RSRP and error rate is meeting (or meets) the consistency threshold, modifying the discard ratio based on one or more of the RSRP and the error rate, and discarding the non-transmitted duplicate packets from the primary RLC path and the secondary RLC path based on the modified discard ratio.

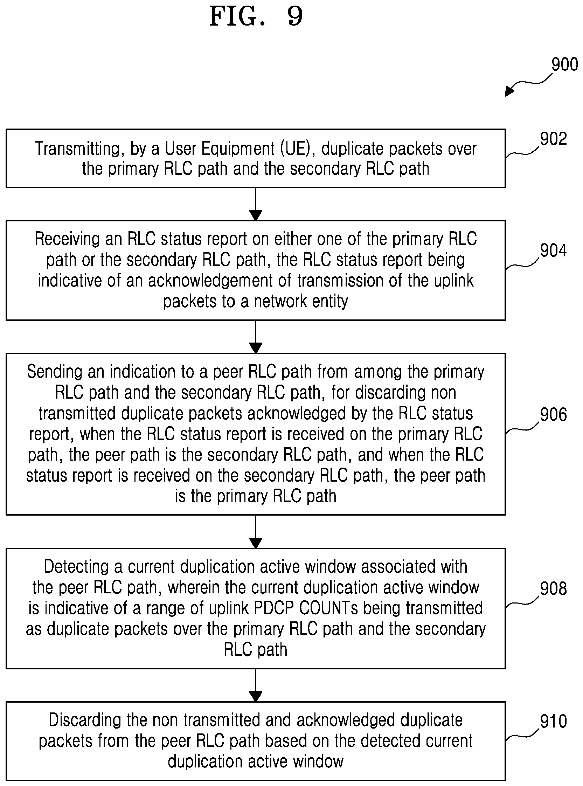

Figure 9 illustrates the flow chart of another method 900 for distributing uplink packets between a primary Radio Link Control (RLC) path and a secondary RLC path in a packet duplication configured bearer, according to embodiments disclosed herein. The method 900 may be performed at the UE 404. The method 900 may be performed by the system 450 comprising the processor 420 and the memory 424 of the UE 404.

At block 902, the method 900 comprises transmitting, by the UE 404, duplicate packets over the primary RLC path and the secondary RLC path.

At block 904, the method 900 comprises receiving an RLC status report on either one of the primary RLC path or the secondary RLC path, the RLC status report being indicative of an acknowledgment of transmission of the uplink packets to a network entity.

At block 906, the method 900 comprises sending an indication to a peer RLC path from among the primary RLC path and the secondary RLC path, for discarding non-transmitted duplicate packets acknowledged by the RLC status report. When the RLC status report is received on the primary RLC path, the peer path is the secondary RLC path, and when the RLC status report is received on the secondary RLC path, the peer path is the primary RLC path.

At block 908, the method 900 comprises detecting a current duplication active window associated with the peer RLC path. The current duplication active window is indicative of a range of uplink PDCP COUNTs being transmitted as duplicate packets over the primary RLC path and the secondary RLC path. According to embodiments, a separate current duplication active window is maintained for each of the primary RLC path and the secondary RLC path. The detected current duplication active window may be that associated with the peer RLC path.

At block 910, the method 900 comprises discarding the non-transmitted and acknowledged duplicate packets from the peer RLC path based on the detected current duplication active window. According to embodiments, subsequent to block 910, the UE 404 may transmit non-transmitted duplicate PDUs via the primary RLC path and/or the secondary RLC path. According to embodiments, for example, the transmission of the non-transmitted duplicate PDUs may include signal processing operations such as modulating, upconverting, filtering, amplifying and/or encrypting.

In embodiments, the current duplication active window is maintained either on receiving a Medium Access Control (MAC) control element activating the PDCP duplication or on receiving a Radio Resource Control (RRC) reconfiguration with PDCP duplication active for the bearer with packet duplication configured with the UE. The current duplication active window is marked by a COUNT associated with a first PDCP duplicated packet transmitted by a PDCP module to lower layers associated with the UE on (e.g., in response to) receiving a PDCP Duplication activation command to a COUNT associated with a last PDCP packet transmitted by the PDCP module to the lower layers just before the deactivation of the PDCP duplication.

In embodiments, the current duplication active window is continually updated upon receiving a deactivation signal indicative of the deactivation of duplication of uplink packets and/or an activation signal indicative of the activation of duplication of uplink packets. According to embodiments, for example, the current duplication active window may be updated in response to each receipt of the deactivation signal and in response to each receipt of the activation signal.

While the above discussed operations in FIGS. 8-9 are shown and described in a particular sequence, the operations may occur in variations to the sequence in accordance with embodiments. Further, a detailed description related to the various operations of FIGS. 8-9 is already covered in the description related to FIGS. 4-7 and is omitted herein for the sake of brevity.

The presently disclosed systems and methods provide a dynamic approach to duplication of uplink packets. By allowing the user equipment (UE) to receive a deactivation signal from the network entity, either through a Medium Access Control (MAC) element or via Radio Resource Control (RRC) reconfiguration, the method facilitates real-time adjustments in packet duplication. Upon receiving the duplication deactivation signal, the UE intelligently discards one or more non-transmitted duplicate packets from the primary RLC path and secondary RLC path. This selective discarding is based on a discard ratio, allowing for a proportional and efficient management of duplicate packets between the two paths. The method involves packet data convergence protocol (PDCP) module associated with the UE, ensuring (or increasing the likelihood of) seamless integration with existing communication protocols. This integration enables the efficient handling and processing of uplink packets within the broader communication framework. The dynamic nature of the discard ratio provides flexibility in adapting to changing network conditions. This adaptability ensures optimal performance (or provides improved performance) in varying scenarios and contributes to overall network efficiency. The discard ratio allows for a fine-grained control over the packet discarding process. The discard ratio minimizes unnecessary overhead (or reduces overhead), as it enables the UE to selectively discard duplicate packets in a manner that aligns with the requirements (or configurations) of the network, preventing unnecessary blocking and/or resource wastage (or reducing blocking and/or resource wastage).

Known devices and methods for performing packet duplication experience several deficiencies in scenarios in which duplication is dynamically activated and deactivated. For example, the known devices and methods discard all non-transmitted duplicate packets on a secondary radio link control (RLC) path in response to receiving a duplication deactivation signal without discarding any packets on a primary RLC path. According, the primary RLC path becomes overloaded and the secondary RLC path underutilized, potentially resulting in packet drop. Also, the known devices and methods discard all non-transmitted duplicate packets on a given RLC path in response to receiving an RLC status report on the other of the two RLC paths. In so doing, the known devices and methods cause sequence number (SN) hole creation or result in excessive delay in attempting to avoid (or reduce) the SN hole creation.

However, according to embodiments, improved devices and methods are provided for performing packet duplication. For example, the improved devices and methods may determine a discard ratio corresponding to a packet discarding proportion between a primary RLC path and a secondary RLC path, and may discard non-transmitted duplicate packets based on the discard ratio in response to a duplication deactivation signal. Additionally or alternatively, the improved devices may determine a current duplication active window, and may only discard non-transmitted duplicate packets on a given RLC path from the current duplication active window path in response to receiving an RLC status report on the other of the two RLC paths. Accordingly, the improved devices and methods overcome the deficiencies of the known devices and methods to at least prevent (or reduce) RLC path overloading and corresponding packet drop, and/or prevent (or reduce) SN hole creation and/or delay in attempting to avoid (or reduce) the SN hole creation.

According to embodiments, operations described herein as being performed by the communication environment 400, the network entity 402, the UE 404, the processor 410, the communication unit 412, the processor 420, the communication unit 422, the system 450, the application unit of the UE 404, the NR-NAS unit of the UE 404, the NR-RRC unit of the UE 404, the primary RLC path 504, the secondary RLC path 506, the PDCP module 512, the lower layers 516 and/or the PDP module of the UE 404 may be performed by processing circuitry. The term 'processing circuitry,' as used in the present disclosure, may refer to, for example, hardware including logic circuits; a hardware/software combination such as a processor executing software; or a combination thereof. For example, the processing circuitry more specifically may include, but is not limited to, a central processing unit (CPU), an arithmetic logic unit (ALU), a digital signal processor, a microcomputer, a field programmable gate array (FPGA), a System-on-Chip (SoC), a programmable logic unit, a microprocessor, application-specific integrated circuit (ASIC), etc.

The various operations of methods described above may be performed by any suitable device capable of performing the operations, such as the processing circuitry discussed above. For example, as discussed above, the operations of methods described above may be performed by various hardware and/or software implemented in some form of hardware (e.g., processor, ASIC, etc.).

The software may comprise an ordered listing of executable instructions for implementing logical functions, and may be embodied in any "processor-readable medium" for use by or in connection with an instruction execution system, apparatus, or device, such as a single or multiple-core processor or processor-containing system.

The blocks or operations of a method or algorithm and functions described in connection with embodiments disclosed herein may be embodied directly in hardware, in a software module executed by a processor, or in a combination of the two. If implemented in software, the functions may be stored on or transmitted over as one or more instructions or code on a tangible, non-transitory computer-readable medium (e.g., the memory 414 and/or the memory 424). A software module may reside in Random Access Memory (RAM), flash memory, Read Only Memory (ROM), Electrically Programmable ROM (EPROM), Electrically Erasable Programmable ROM (EEPROM), registers, hard disk, a removable disk, a CD ROM, or any other form of storage medium known in the art.

Embodiments disclosed herein may be implemented through at least one software program running on at least one hardware device and performing network management functions to control the elements. The elements may be at least one of a hardware device, or a combination of hardware device and software module.

Unless otherwise defined, all technical and scientific terms used herein have the same meaning as, or a similar meaning to, that commonly understood by one ordinary skilled in the art to which the inventive concepts belong. The system, methods, and examples provided herein are illustrative only and not intended to be limiting.

While specific language has been used to describe the present subject matter, any limitations arising on account thereto, are not intended. As would be apparent to a person in the art, various working modifications may be made to the method to implement embodiments of the inventive concepts as taught herein. The drawings and the forgoing description give examples of embodiments. Those skilled in the art will appreciate that one or more of the described elements may well be combined into a single functional element. Alternatively, certain elements may be split into multiple functional elements. Elements from one example may be added to another example.

Embodiments disclosed herein may be implemented using at least one hardware device and performing network management functions to control the elements. In a development that is not part of the invention, a method for distributing uplink packets between a primary Radio Link Control (RLC) path and a secondary RLC path in a packet duplication configured bearer is disclosed. The method includes transmitting, by a User Equipment (UE), first duplicate packets over the primary RLC path and the secondary RLC path, receiving an RLC status report on either of the primary RLC path or the secondary RLC path, the RLC status report being indicative of an acknowledgement of transmission of the uplink packets to a network entity, sending an indication to a peer RLC path from among the primary RLC path and the secondary RLC path for discarding non-transmitted duplicate packets acknowledged by the RLC status report, the RLC status report having been received on one among the primary RLC path and the secondary RLC path different from the peer RLC path, detecting a current duplication active window associated with the peer RLC path, the current duplication active window being indicative of a range of uplink PDCP COUNTs being transmitted as duplicate packets over the peer RLC path, and discarding the non-transmitted duplicate packets from the peer RLC path based on the current duplication active window.

In another development that is not part of the invention, a system at a user equipment (UE) for distributing uplink packets between a primary Radio Link Control (RLC) path and a secondary RLC path in a packet duplication configured bearer is disclosed. The system includes processing circuitry configured to transmit first duplicate packets over the primary RLC path and the secondary RLC path, receive an RLC status report on either of the primary RLC path or the secondary RLC path, the RLC status report being indicative of an acknowledgement of transmission of the uplink packets to a network entity, send an indication to a peer RLC path from among the primary RLC path and the secondary RLC path for discarding non-transmitted duplicate packets acknowledged by the RLC status report, the RLC status report having been received on one among the primary RLC path and the secondary RLC path different from the peer RLC path, detect a current duplication active window associated with the peer RLC path, the current duplication active window being indicative of a range of uplink PDCP COUNTs being transmitted as duplicate packets over the peer RLC path, and discard the non-transmitted duplicate packets from the peer RLC path based on the detected current duplication active window.

Methods that are not part of the invention are set out in the following clauses:

Clause 1. A method for distributing uplink packets between a primary Radio Link Control (RLC) path and a secondary RLC path in a packet duplication configured bearer, the method comprising:

transmitting, by a User Equipment (UE), first duplicate packets over the primary RLC path and the secondary RLC path;

receiving an RLC status report on either of the primary RLC path or the secondary RLC path, the RLC status report being indicative of an acknowledgement of transmission of the uplink packets to a network entity;

sending an indication to a peer RLC path from among the primary RLC path and the secondary RLC path for discarding non-transmitted duplicate packets acknowledged by the RLC status report, the RLC status report having been received on one among the primary RLC path and the secondary RLC path different from the peer RLC path;

detecting a current duplication active window associated with the peer RLC path, the current duplication active window being indicative of a range of uplink PDCP COUNTs being transmitted as duplicate packets over the peer RLC path; and

discarding the non-transmitted duplicate packets from the peer RLC path based on the current duplication active window.

Clause 2. The method as defined in clause 2, wherein

the current duplication active window is maintained either in response to

receiving a Medium Access Control (MAC) control element activating PDCP duplication, or

receiving a Radio Resource Control (RRC) reconfiguration with PDCP duplication active for the bearer and packet duplication configured with the UE; and

the current duplication active window is marked by a COUNT associated with a first PDCP duplicated packet transmitted to lower layers associated with the UE in response to receiving a PDCP Duplication activation command to a COUNT associated with a last PDCP packet transmitted to the lower layers just before deactivation of the PDCP duplication.

Clause 3. The method as defined in clause 10, wherein the current duplication active window is continually updated in response to receiving a deactivation signal indicative of deactivation of duplication of uplink packets and in response to receiving an activation signal indicative of activation of duplication of uplink packets.

The foregoing description of the specific examples will so fully reveal the general nature of embodiments herein that others may, by applying current knowledge, readily modify and/or adapt for various applications such specific examples without departing from the generic concept, and, therefore, such adaptations and modifications should and are intended to be comprehended within the meaning and range of equivalents of embodiments. It is to be understood that the phraseology or terminology employed herein is for the purpose of description and not of limitation. Therefore, while embodiments herein have been described in terms of examples, those skilled in the art will recognize that the examples herein may be practiced with modification within the scope of embodiments as described herein, wherein the invention is defined by the claims.

**Claims**

1. A method for distributing uplink packets between a primary Radio Link Control (RLC) path and a secondary RLC path in a packet duplication configured bearer, the method comprising:

    transmitting, by a user equipment (UE), the uplink packets over the primary RLC path and the secondary RLC path as duplicate packets;
    dynamically receiving, at the UE from a network entity, a deactivation signal via a Medium Access Control (MAC) control element or a Radio Resource Control (RRC) reconfiguration, the deactivation signal indicating deactivation of packet duplication; and
    discarding, at the UE, one or more non-transmitted duplicate packets from the primary RLC path and the secondary RLC path based on a discard ratio in response to receiving the deactivation signal, the discard ratio being indicative of a packet discarding proportion between the primary RLC path and the secondary RLC path.

2. The method as claimed in claim 1, further comprising:

    computing a transmission time duration, the transmission time duration corresponding to an amount of time taken to transmit the uplink packets over the primary RLC path, the transmission time duration being computed based on one or more of

        an instantaneous data rate on the primary RLC path, and/or
        an averaged data rate on the primary RLC path over a time period; and

    comparing the transmission time duration with a reordering timer value associated with a Packet Data Convergence Protocol (PDCP) reordering value, the PDCP reordering value being configured for the bearer by the network entity,
    wherein the discarding of the one or more non-transmitted duplicate packets includes discarding the one or more non-transmitted duplicate packets in response to determining that the transmission time duration is less than the PDCP reordering value.

3. The method as claimed in claim 1 or 2, further comprising:

    computing the discard ratio, the discard ratio being inversely proportional to a data rate over both the primary RLC path and the secondary RLC path respectively;
    determining a maximum available RLC data over both the primary RLC path and the secondary RLC path;
    determining whether a split threshold configured for the bearer by the network entity is smaller than a total data available for transmission;
    discarding the one or more non-transmitted duplicate packets over both the primary RLC path and the secondary RLC path in proportion to the discard ratio; and
    adjusting RLC Sequence Numbers (SNs) associated with other uplink packets based on the discarding of the one or more non-transmitted duplicate packets.

4. The method as claimed in any preceding claim, further comprising:

determining a maximum available amount of the one or more non-transmitted duplicated packets over both the primary RLC path and the secondary RLC path;

determining whether a split threshold configured for the bearer by the network entity is smaller than a total data available for transmission at the UE;

submitting non-transmitted duplicated RLC service data units (SDUs) to be redistributed over both the primary RLC path and the secondary RLC path;

submitting the uplink packets to lower layers associated with the UE over both the primary RLC path and the secondary RLC path in an increasing COUNT manner; and

managing RLC Sequence Numbers (SNs) associated with the uplink packets at both the primary RLC path and the secondary RLC path.

5. The method as claimed in any preceding claim, further comprising:

comparing a transmission time duration with a reordering timer value, the transmission time duration corresponding to an amount of time taken to transmit the uplink packets over the primary RLC path, and the reordering timer value being associated with a PDCP reordering value configured for the bearer by the network entity; and

determining one of availability or non-availability of new packets for transmission at the UE in response to determining that the transmission time duration is greater than the reordering timer value,

wherein the discarding of the one or more non-transmitted duplicate packets includes discarding the one or more non-transmitted duplicate packets in response to determining non-availability of the new packets.

6. The method as claimed in any preceding claim, further comprising:

comparing a transmission time duration with a reordering timer value, the transmission time duration corresponding to an amount of time taken to transmit the uplink packets over the primary RLC path, and the reordering timer value being associated with a PDCP reordering value configured for the bearer by the network entity; and

determining one of availability or non-availability of new packets for transmission at the UE in response to determining that the transmission time duration is greater than the reordering timer value,

wherein the discarding of the one or more non-transmitted duplicate packets includes discarding the one or more non-transmitted duplicate packets in response to determining availability of the new packets.

7. The method as claimed in claim 6, further comprising:

monitoring one or more of a Reference Signal Received Power (RSRP) or an error rate associated with the primary RLC path and the secondary RLC path for computing the transmission time duration;

determining whether the one or more of the RSRP or the error rate meets a consistency threshold value; and

modifying the discard ratio based on the one or more of the RSRP or the error rate in response to determining that the one or more of the RSRP or the error rate meets the consistency threshold value to obtain a modified discard ratio.

8. The method as claimed in claim 7, further comprising:

wherein the discarding of the one or more non-transmitted duplicate packets includes discarding the one or more non-transmitted duplicate packets based on the modified discard ratio.

9. A system at a user equipment (UE) for distributing uplink packets between a primary Radio Link Control (RLC) path and a secondary RLC path in a packet duplication configured bearer, the system comprising processing circuitry configured to:

transmit the uplink packets over the primary RLC path and the secondary RLC path as duplicate packets;

dynamically receive, from a network entity, a deactivation signal via a Medium Access Control (MAC) control element or a Radio Resource Control (RRC) reconfiguration, the deactivation signal indicating deactivation of packet duplication; and

discard one or more non-transmitted duplicate packets from the primary RLC path and the secondary RLC path based on a discard ratio in response to receiving the deactivation signal.

10. The system as claimed in claim 9, wherein the discard ratio being indicative of a packet discarding proportion between the primary RLC path and the secondary RLC path.

**11.** The system as claimed in claim 9 or 10, wherein the processing circuitry is configured to:

compute a transmission time duration, the transmission time duration corresponding to an amount of time taken to transmit the uplink packets over the primary RLC path, the transmission time duration being computed based on one or more of

an instantaneous data rate on the primary RLC path, and/or
an averaged data rate on the primary RLC path over a time period;

compare the transmission time duration with a reordering timer value associated with a Packet Data Convergence Protocol (PDCP) reordering value, the PDCP reordering value being configured for the bearer by the network entity; and
discard the one or more of the non-transmitted duplicate packets in response to determining that the transmission time duration is less than the PDCP reordering value.

**12.** The system as claimed in any one of claims 9 to 11, wherein the processing circuitry is configured to:

compute the discard ratio, the discard ratio being inversely proportional to a data rate over both the primary RLC path and the secondary RLC path respectively;
determine a maximum available RLC data over both the primary RLC path and the secondary RLC path;
determine whether a split threshold configured for the bearer by the network entity is smaller than a total data available for transmission;
discard the one or more non-transmitted duplicate packets over both the primary RLC path and the secondary RLC path in proportion to the discard ratio; and
adjust RLC Sequence Numbers (SNs) associated with other uplink packets based on discarding of the one or more non-transmitted duplicate packets at both the primary RLC path and the secondary RLC path.

**Amended claims in accordance with Rule 137(2) EPC.**

**1.** A method for distributing uplink packets (502) between a primary Radio Link Control, RLC, path (504) and a secondary RLC path (506) in a packet duplication configured split bearer, the method operating in a system providing dual connectivity uplink data transfer betweeen a user equipment, UE, (404) and a network entity (402), the method comprising:

transmitting, by the user equipment, UE, (404) the uplink packets (502) over the primary RLC path (504) and the secondary RLC path (506) as duplicate packets (508);
dynamically receiving, at the UE (404) from the network entity (402), a deactivation signal via a Medium Access Control, MAC, control element or a Radio Resource Control, RRC, reconfiguration, the deactivation signal indicating deactivation of packet duplication;
discarding, at the UE (404), one or more non-transmitted duplicate packets (514) from the primary RLC path (504) and the secondary RLC path (506) based on a discard ratio (518) in response to receiving the deactivation signal, wherein the discard ratio (518) corresponds to a proportion of the number of non-transmitted duplicate packets to be discarded from the primary RLC path (504) with respect to a total number of one or more non-transmitted duplicate packets (514) subject to discard in response to the deactivation signal.

**2.** The method as claimed in claim 1, further comprising:

computing a transmission time duration, the transmission time duration corresponding to an amount of time taken to transmit the uplink packets (502) over the primary RLC path (504), the transmission time duration being computed based on one or more of:

an instantaneous data rate on the primary RLC path (504); and/or
an averaged data rate on the primary RLC path (504) over a time period; and

comparing the transmission time duration with a reordering timer value associated with a Packet Data Convergence Protocol, PDCP, reordering value, the PDCP reordering value being configured for the bearer by the network entity (402),
wherein the discarding of the one or more non-transmitted duplicate packets (514) includes discarding the one or more non-transmitted duplicate packets (514) in response to determining that the transmission time duration is less than the PDCP reordering value.

3. The method as claimed in claim 1 or 2, further comprising:

computing the discard ratio (518), the discard ratio being inversely proportional to a data rate over both the primary RLC path (504) and the secondary RLC path (506) respectively;

determining a maximum available RLC data over both the primary RLC path and the secondary RLC path (506);

determining whether a split threshold configured for the bearer by the network entity (402) is smaller than a total data available for transmission;

discarding the one or more non-transmitted duplicate packets (514) over both the primary RLC path (504) and the secondary RLC path (506) in proportion to the discard ratio (518); and

adjusting RLC Sequence Numbers, SNs, associated with other uplink packets (502) based on the discarding of the one or more non-transmitted duplicate packets (514).

4. The method as claimed in any preceding claim, further comprising:

determining a maximum available amount of the one or more non-transmitted duplicated packets (514) over both the primary RLC path (504) and the secondary RLC path (506);

determining whether a split threshold configured for the bearer by the network entity (402) is smaller than a total data available for transmission at the UE (404);

submitting non-transmitted duplicated RLC service data units, SDUs, to be redistributed over both the primary RLC path (504) and the secondary RLC path (506);

submitting the uplink packets (502) to lower layers associated with the UE (404) over both the primary RLC path (504) and the secondary RLC path (506) in an increasing COUNT manner; and

managing RLC Sequence Numbers, SNs, associated with the uplink packets (502) at both the primary RLC path (504) and the secondary RLC path (506).

5. The method as claimed in any preceding claim, further comprising:

comparing a transmission time duration with a reordering timer value, the transmission time duration corresponding to an amount of time taken to transmit the uplink packets (502) over the primary RLC path (504), and the reordering timer value being associated with a PDCP reordering value configured for the bearer by the network entity (402); and

determining one of availability or non-availability of new packets for transmission at the UE (404) in response to determining that the transmission time duration is greater than the reordering timer value,

wherein the discarding of the one or more non-transmitted duplicate packets (514) includes discarding the one or more non-transmitted duplicate packets (514) in response to determining non-availability of the new packets.

6. The method as claimed in any preceding claim, further comprising:

comparing a transmission time duration with a reordering timer value, the transmission time duration corresponding to an amount of time taken to transmit the uplink packets (502) over the primary RLC path (504), and the reordering timer value being associated with a PDCP reordering value configured for the bearer by the network entity (402); and

determining one of availability or non-availability of new packets for transmission at the UE (404) in response to determining that the transmission time duration is greater than the reordering timer value,

wherein the discarding of the one or more non-transmitted duplicate packets (514) includes discarding the one or more non-transmitted duplicate packets (514) in response to determining availability of the new packets.

7. The method as claimed in claim 6, further comprising:

monitoring one or more of a Reference Signal Received Power, RSRP, (522) or an error rate (524) associated with the primary RLC path (504) and the secondary RLC path (506) for computing the transmission time duration;

determining whether the one or more of the RSRP (522) or the error rate (524) meets a consistency threshold value; and

modifying the discard ratio (518) based on the one or more of the RSRP (522) or the error rate (524) in response to determining that the one or more of the RSRP (522) or the error rate (524) meets the consistency threshold value to obtain a modified discard ratio.

8. The method as claimed in claim 7, further comprising:
   wherein the discarding of the one or more non-transmitted duplicate packets (514) includes discarding the one or more non-transmitted duplicate packets based on the modified discard ratio (518).

9. A system at a user equipment, UE, (404) for distributing uplink packets (502) between a primary Radio Link Control, RLC, path (504) and a secondary RLC path (506) in a packet duplication configured split bearer, the UE (404) configured to transfer data via a dual connectivity uplink with a network entity (402), the system comprising processing circuitry (420) configured to:

   transmit the uplink packets (502) over the primary RLC path (504) and the secondary RLC path (506) as duplicate packets (508);
   dynamically receive, from a network entity (402), a deactivation signal via a Medium Access Control, MAC, control element or a Radio Resource Control, RRC, reconfiguration, the deactivation signal indicating deactivation of packet duplication; and
   discard one or more non-transmitted duplicate packets (514) from the primary RLC path (504) and the secondary RLC path (506) based on a discard ratio (518) in response to receiving the deactivation signal, wherein the discard ratio (518) is corresponds to a proportion of the number of non-transmitted duplicate packets to be discarded from the primary RLC path (504) with respect to a total number of one or more non-transmitted duplicate packets (514) subject to discard in response to the deactivation signal.

10. The system as claimed in claim 9, wherein the processing circuitry (420) is configured to:

    compute a transmission time duration, the transmission time duration corresponding to an amount of time taken to transmit the uplink packets (502) over the primary RLC path (504), the transmission time duration being computed based on one or more of

    an instantaneous data rate on the primary RLC path (504), and/or
    an averaged data rate on the primary RLC path (504) over a time period;

    compare the transmission time duration with a reordering timer value associated with a Packet Data Convergence Protocol,(PDCP, reordering value, the PDCP reordering value being configured for the bearer by the network entity (402); and
    discard the one or more of the non-transmitted duplicate packets (514) in response to determining that the transmission time duration is less than the PDCP reordering value.

11. The system as claimed in any one of claims 9 to 10, wherein the processing circuitry (420) is configured to:

    compute the discard ratio (518), the discard ratio being inversely proportional to a data rate over both the primary RLC path (504) and the secondary RLC path (506) respectively;
    determine a maximum available RLC data over both the primary RLC path (504) and the secondary RLC path (506);
    determine whether a split threshold configured for the bearer by the network entity (402) is smaller than a total data available for transmission;
    discard the one or more non-transmitted duplicate packets (514) over both the primary RLC path (504) and the secondary RLC path (506) in proportion to the discard ratio (518); and
    adjust RLC Sequence Numbers, SNs, associated with other uplink packets (502) based on discarding of the one or more non-transmitted duplicate packets (514) at both the primary RLC path (504) and the secondary RLC path (506).

# FIG. 1 (prior art)

# FIG. 2 (prior art)

200

UE 106

| PDCP | RLC1 | RLC2 | MAC | Network |

Duplication Activation — 202 — T0

1..N — 204a

1..N — 204b

1..P

1..P

208 — (N-P) discarded

Duplication Deactivation — 206 — T1

No packet at RLC2

N+1···2N — 210a

2N+1···3N — 210b

(N-P)+1..N, N+1..N+P — 212a — T2

2N+1···3N — 212b

T3 (t-reordering start) — 215

2N+1 >> P+1

T4 (t-reordering expire) — 216

Discard N+P+1..2N

T5

TCP level re-transmission post T4

EP 4 657 784 A1

20

# FIG. 3A (prior art)

300a

| PDCP | Primary RLC | Secondary RLC | Network |

**1**   t

**2**   PDCP → Primary RLC: 0–2500

**3**   PDCP → Secondary RLC: 2501–5000

**4**   Primary RLC → Network: 1000 packet transmitted (0–1000)

**5**   Secondary RLC → Network: 2500 packet transmitted (2501–5000)

**6**   Network → PDCP: Duplication activate (MAC-CE)

**7**   PDCP → Primary RLC: 5001–10000

**8**   PDCP → Secondary RLC: 5001–10000

**9**   Primary RLC → Network: 1000 packet transmitted (1001–2000)

**10**   Secondary RLC → Network: 2500 packet transmitted (5001–7500)

**11**   Network → PDCP: Duplication de-activate (MAC-CE) ⟶ 302

**12**   PDCP → Secondary RLC: Discard duplicate packets, 7501–10000

**13**   5500 packets in UL queue for transmission; duplicate transmission of 5001–7500 | No packet in UL queue for transmission — 304

# FIG. 3B (prior art)

300b

| PDCP | Primary RLC | Secondary RLC | Network |

1-100

101-200

40 packet transmitted (0-40)

100 packet transmitted (101-200)

Duplication activate

201-400

201-400

80 packet transmitted (41-100, 201-220)

200 packet transmitted (201-400)

Duplication activate

401-500

501-600

40 packet transmitted (221-260)

100 packet transmitted (501-600)

Duplication activate

601-800

601-800

80 packet transmitted (261-340)

200 packet transmitted (601-800)

ACK till PDCP SN 801

ACK till PDCP SN 801 — 306

ACK received till 801

Discard duplicate 341-400, 601-800 — 308

Rear range SN for 401-500 — 310

# FIG. 4

EP 4 657 784 A1

**FIG. 5**

500

Network Entity — 402

404

UE

PDCP Module — 512

First PDCP Duplicated Packet — 530

Last PDCP Packet — 532

Lower Layers — 516

**Primary RLC path** — 504

504

Discard Ratio — 518

RSRP — 522

Error Rate — 524

Duplicate Packets — 508

Non-Transmitted Duplicate Packets — 514

RLC Status Report — 526

Current Duplication Active Window — 528

**Secondary RLC path**

Discard Ratio — 518

RSRP — 522

Error Rate — 524

Duplicate Packets — 508

Non-Transmitted Duplicate Packets — 514

RLC Status Report — 526

Current Duplication Active Window — 528

506

Uplink Packets — 502

# FIG. 6

600

Start

601
Tp > Tr

NO → 602
Discard the duplicate data to be transmitted in a fixed ratio from both primary RLC and secondary RLC

YES ↓

603
No new UL data available for trx

YES →

NO ↓

604
R = Calculated based on running UL throughput observed on primary and secondary RLC path, non duplicated data present in both RLC paths and current PDCP

605
RSRP and error rate are consistent

606
Distribute non-transmitted duplicate PDUs on both primary and secondary RLC paths based on the ratio 'R' calculated

YES →

NO ↓

607
1. Modify 'R' based on the RSRP and BLER observed, so as to distribute more amount of existing data on the better path.

2. Distribute not yet transmitted duplicate PDUs on both primary and secondary RLC based on the modified 'R'

End

# FIG. 7

700

702 | 704

DUP active | 6N+1 ⋯ 7N | 6N+1 ⋯ 7N
DUP de-activated | 4N+1 ⋯ 5N | 4N+1 ⋯ 5N
DUP active | 3N+1 ⋯ 4N | 3N+1 ⋯ 4N
DUP de-activated | N+1 ⋯ 2N | N+1 ⋯ 2N
DUP active | 0 ⋯ N | 0 ⋯ N

RLC status report received at secondary RLC buffer

Need to arrange SN | 6N+1 ⋯ 7N | 6N+1 ⋯ 7N
| 4N+1 ⋯ 5N | 4N+1 ⋯ 5N
| 3N+1 ⋯ 4N | 3N+1 ⋯ 4N
Need to arrange SN | N+1 ⋯ 2N | N+1 ⋯ 2N
| 0 ⋯ N | 0 ⋯ N

⬛ Packet Transmitted
⬜ Packet Discarded

(a)

702 | 704

DUP active | 6N+1 ⋯ 7N | 6N+1 ⋯ 7N
DUP de-activated | 4N+1 ⋯ 5N | 4N+1 ⋯ 5N
DUP active | 3N+1 ⋯ 4N | 3N+1 ⋯ 4N
DUP de-activated | N+1 ⋯ 2N | N+1 ⋯ 2N
DUP active | 0 ⋯ N | 0 ⋯ N

RLC status report received at secondary RLC buffer

528 → | 6N+1 ⋯ 7N | 6N+1 ⋯ 7N
| 4N+1 ⋯ 5N | 4N+1 ⋯ 5N
| 3N+1 ⋯ 4N | 3N+1 ⋯ 4N
| N+1 ⋯ 2N | N+1 ⋯ 2N
| 0 ⋯ N | 0 ⋯ N

⬛ Packet Transmitted
⬜ Packet Discarded

(b)

EP 4 657 784 A1

# FIG. 8

800

| Transmitting, by a user equipment (UE), uplink packets over the primary RLC path and the secondary RLC path as duplicate packets | 802 |

| Receiving, at the UE from a network entity, a deactivation signal indicative of deactivation of duplication of uplink packets, dynamically via a Medium Access Control (MAC) control element or via Radio Resource Control (RRC) reconfiguration, at a Packet Data Convergence Protocol (PDCP) module associated with the UE | 804 |

| Upon receiving a duplication deactivation signal, discarding, at the UE, one or more of non-transmitted duplicate packets from the primary RLC path and the secondary RLC path based on a discard ratio, wherein the discard ratio is indicative of a packet discarding proportion between the primary RLC path and the secondary RLC path | 806 |

# FIG. 9

900

| |
|---|
| Transmitting, by a User Equipment (UE), duplicate packets over the primary RLC path and the secondary RLC path |

902

| |
|---|
| Receiving an RLC status report on either one of the primary RLC path or the secondary RLC path, the RLC status report being indicative of an acknowledgement of transmission of the uplink packets to a network entity |

904

| |
|---|
| Sending an indication to a peer RLC path from among the primary RLC path and the secondary RLC path, for discarding non transmitted duplicate packets acknowledged by the RLC status report, when the RLC status report is received on the primary RLC path, the peer path is the secondary RLC path, and when the RLC status report is received on the secondary RLC path, the peer path is the primary RLC path |

906

| |
|---|
| Detecting a current duplication active window associated with the peer RLC path, wherein the current duplication active window is indicative of a range of uplink PDCP COUNTs being transmitted as duplicate packets over the primary RLC path and the secondary RLC path |

908

| |
|---|
| Discarding the non transmitted and acknowledged duplicate packets from the peer RLC path based on the detected current duplication active window |

910

Europäisches
Patentamt

European
Patent Office

Office européen
des brevets

# EUROPEAN SEARCH REPORT

**Application Number**

EP 24 19 2376

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/160733 A1 (KIM DONGGUN [KR] ET AL) 27 May 2021 (2021-05-27) | 1,4-6,9, 10 | INV. H04L1/08 |
| A | * paragraph [0199] * | 2,3,7,8, 11,12 | |
| | ----- | | |
| X | HUAWEI ET AL: "RLC behaviors upon duplicate deactivation", 3GPP DRAFT; R2-1710762 RLC BEHAVIOURS UPON DUPLICATE DEACTIVATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRAN , vol. RAN WG2, no. Prague, Czech; 20171009 - 20171013 29 September 2017 (2017-09-29), XP051355167, Retrieved from the Internet: URL:http://www.3gpp.org/ftp/tsg_ran/WG2_RL 2/TSGR2_99bis/Docs/ [retrieved on 2017-09-29] | 1,4-6,9, 10 | |
| A | * the whole document * | 2,3,7,8, 11,12 | TECHNICAL FIELDS SEARCHED (IPC) H04L |
| | ----- | | |

The present search report has been drawn up for all claims

| Place of search | Date of completion of the search | Examiner |
|---|---|---|
| The Hague | 23 January 2025 | Kazaniecki, Daniel |

EPO FORM 1503 03.82 (P04C01)

## ANNEX TO THE EUROPEAN SEARCH REPORT
## ON EUROPEAN PATENT APPLICATION NO.

EP 24 19 2376

This annex lists the patent family members relating to the patent documents cited in the above-mentioned European search report.
The members are as contained in the European Patent Office EDP file on
The European Patent Office is in no way liable for these particulars which are merely given for the purpose of information.

23-01-2025

| Patent document cited in search report | Publication date | Patent family member(s) | | Publication date |
|---|---|---|---|---|
| US 2021160733 A1 | 27-05-2021 | US | 2019253924 A1 | 15-08-2019 |
| | | US | 2019253926 A1 | 15-08-2019 |
| | | US | 2021160733 A1 | 27-05-2021 |
| | | WO | 2019160270 A1 | 22-08-2019 |

EPO FORM P0459